# EUROPÄISCHE PATENTSCHRIFT

(11) **EP 1 669 590 B1**
(45) Veröffentlichungstag und Bekanntmachung des Hinweises auf die Patenterteilung: **20.02.2008**
(21) Anmeldenummer: 05111776.0
(22) Anmeldetag: 07.12.2005
(51) Int. Cl.: F02M 37/22, B01D 36/00

(54) **Kraftstofffiltersystem, insbesondere für Kraftfahrzeuge und Verfahren zu dessen Betrieb**
Fuel filter system particularly for motor vehicles and method for its operation
Système de filtre de carburant, en particulier pour véhicules, et son procédé de fonctionnement

(30) Priorität: 07.12.2004 DE 102004059062
(43) Veröffentlichungstag der Anmeldung: 14.06.2006
(73) Patentinhaber: Mann + Hummel GmbH, 71638 Ludwigsburg (DE)
(72) Erfinder: Linhart, Jochen, 71332, Waiblingen (DE); Micke, Michael, 70378, Stuttgart (DE); Fasold, Michael, 71549, Auenwald (DE)

## Beschreibung

### Technisches Gebiet

Die Erfindung betrifft ein Kraftstofffiltersystem nach dem Oberbegriff des Anspruchs 1 sowie ein Verfahren zum Betrieb des Kraftstofffiltersystems nach Anspruch 9.

### Stand der Technik

Das Dokument DE 101 38 695 offenbart eine Vorrichtung zum Austrag von Wasser aus einem Kraftstoffsystem. Das Kraftstoffsystem verfügt über ein Filterelement, an welchem Wasser abgeschieden wird. Das abgeschiedene Wasser sammelt sich in einem Sammelraum. Unter dem Sammelraum ist ein Auffangraum angeordnet, wobei zwischen dem Sammelraum und dem Auffangraum eine Membran angeordnet ist. Die Membran ist derart ausgestaltet, dass nur Reinstwasser hindurch treten kann. Für Kraftstoffmoleküle ist die Membran undurchlässig. In dem Sammelraum ist ein Wassersensor angeordnet, welcher mit einem im Auffangraum angeordneten Ventil verbunden ist.

Aufgabe der Erfindung ist die Schaffung eines Kraftstofffiltersystems, welches über eine kompakte Wasserabscheidungsvorrichtung verfügt. Diese Aufgabe wird durch die Merkmale des Patentanspruches 1 gelöst.

### Offenbarung der Erfindung

Der erfindungsgemäße Kraftstofffilter dient der Reinigung von Kraftstoff, insbesondere von Dieselkraftstoff, bei Kraftfahrzeugen oder Arbeitsmaschinen. Der Kraftstofffilter weist ein Filtergehäuse mit einem Einlass für ungereinigten Kraftstoff und einem Auslass für gereinigten Kraftstoff auf. In dem Filtergehäuse ist ein Filterelement angeordnet, welches den Einlass dichtend von dem Auslass trennt. Weiterhin wird an dem Filterelement im Kraftstoff enthaltenes Wasser abgeschieden. Da das abgeschiedene Wasser schwerer ist als der Kraftstoff, sinkt das Wasser in den unteren Bereich des Kraftstofffilters ab und sammelt sich in einem Sammelraum. Im Bereich des Sammelraums ist eine Wasseraustragsvorrichtung angeordnet, welche über ein Gehäuse verfügt. Das Gehäuse weist einen Eintritt und einen Austritt auf. In dem Gehäuse ist eine für Wassermoleküle durchlässige Membran angeordnet, welche den Eintritt von dem Austritt trennt. Die Membran, welche z. B. aus einem Polymer besteht, verfügt über Kanalstrukturen, welche einerseits dichtend verschlossen sind. Der Verschluss ist aus einem wasser- und kraftstoffbeständigen Material erzeugt, damit der Verschluss dauerhaft die Kanalstrukturen verschließt. Weiterhin ist der Verschluss zumindest für Kraftstoffanteile undurchlässig. Bei einer vorteilhaften Ausgestaltung besteht der Verschluss aus dem gleichen Material, wie die Membran selbst, wodurch auch die Fläche des Verschlusses als Membranoberfläche genutzt werden kann. Das im Sammelraum enthaltene Wasser ist noch mit Kraftstoffanteilen verunreinigt, wodurch dieses Wasser nicht ungereinigt an die Umwelt abgegeben werden darf. Dieses verunreinigte Wasser tritt durch den Eintritt in das Gehäuse der Wasseraustragsvorrichtung ein und benetzt die Membran. Da die Kanalstrukturen einseitig verschlossen sind, kann das verunreinigte Wasser nicht direkt in die Kanalstrukturen eintreten. Bei einem Druckunterschied zwischen der Außenseite der Membran und der Kanalstruktur treten Wassermoleküle aus dem verunreinigten Wasser durch die Membran hindurch. Die Kraftstoffanteile verbleiben auf der anderen Seite der Membran. Die durch die Membran hindurch getretenen Wassermoleküle vereinen sich zu Wassertropfen, welche direkt aus der Wasseraustragsvorrichtung in die Umwelt abgegeben werden können. Hierzu fließen die Wassertropfen durch das offene Ende der Kanalstrukturen ab. Die offenen Enden münden in einen Sockel, welcher über einen Drainagekanal verfügt. In dem Drainagekanal werden die Wassertropfen der einzelnen Kanalstrukturen zusammengeführt und ausgetragen. Durch die Verwendung einer Membran mit Kanalstrukturen kann auf relativ wenig Bauraum eine relativ große Membranoberfläche erzeugt werden. Hierbei kann die Membran als Flach- oder Rundmembran ausgestaltet sein, welche über integrierte Kanäle verfügt. Es ist jedoch auch möglich, einzelne Hohlfasern zu verwenden, welche zu einem Bündel zusammengepackt werden. Der Druckunterschied zwischen der Außenseite der Membran und der Kanalstruktur kann durch den, im Filtergehäuse herrschenden Druck, welcher durch eine Kraftstoffpumpe eingeleitet wird, erzeugt werden. Der Druck in der Kanalstruktur kann dann z. B. der Umgebungsdruck sein.

Gemäß einer vorteilhaften Ausgestaltung besteht die Membran aus einem anorganischen Material, insbesondere Keramik. Dieses Material ist auch bei wechselhaften Temperaturen beständig. Sowohl sehr hohe als auch sehr niedrige Temperaturen zerstören dieses Material nicht, wodurch die Funktion der Wasseraustragsvorrichtung dauerhaft gewährleistet ist.

Gemäß einer vorteilhaften Ausführung der Erfindung ist ein Ventil zwischen dem Eintritt und dem Austritt angeordnet, wodurch die Durchströmung der Wasseraustragsvorrichtung gezielt erfolgen bzw. verhindert werden kann. Die Anordnung des Ventils zwischen dem Eintritt und der Membran ist besonders vorteilhaft, da das Ventil im geschlossenen Zustand verhindert, dass die Membran in direkten Kontakt mit Kraftstoff gerät und die Membran verstopft. Erst wenn eine ausreichende Menge Wasser verfügbar ist, wird das Ventil geöffnet, wodurch das Wasser zu der Membran strömen kann. Um zu erfassen, ob eine ausreichende Menge Wasser in dem Sammelraum vorhanden ist, ist es vorteilhaft, dass ein Sensor im Sammelraum angeordnet ist, welcher mit dem Ventil korrespondierend verbunden ist. Dieser Sensor kommuniziert mit dem Ventil, wodurch das Ventil bei einer ausreichenden Wassermenge geöffnet bzw. beim Unterschreiten einer Mindestwassermenge geschlossen wird.

Bei einer vorteilhaften Ausgestaltung der Erfindung verfügt das Gehäuse über ein Totvolumen, in welchem sich von der Membran abgeschiedene Kraftstoffreste sammeln. Das Totvolumen ist im geodätisch oberen Bereich des Gehäuses angeordnet. Da die von der Membran zurückgehaltenen Kraftstoffreste leichter sind als Wasser, steigen diese Kraftstoffreste - unterstützt durch die im Betrieb ständig vorhandenen Vibrationen - nach oben und sammeln sich. Es können auch gezielt Vibrationen, insbesondere hochfrequente Vibrationen, eingeleitet werden, um das Ablösen der Kraftstoffreste von der Membranoberfläche zu unterstützen. Zur Übertragung der Vibrationen auf das Kraftstofffiltersystem können Verstärkungs- oder Dämpfungselemente an bestimmten Bereichen der Karosserie angebracht sein. Somit wird die Membranoberfläche von den Kraftstoffresten befreit und nicht für die Speicherung der Kraftstoffreste blockiert.

Bei einer Weiterbildung der Erfindung verfügt das Totvolumen über ein Ablassventil, welches mit dem Sammelraum in dem Filtergehäuse kommunizierend verbunden ist. Dieses Ablassventil kann dann geöffnet werden, wenn sich in dem Totvolumen eine größere Menge an Kraftstoffresten angesammelt hat. Durch das Öffnen des Ablassventils entweichen die Kraftstoffreste in den Sammelraum des Filtergehäuses und können der Verbrennung zugeführt werden. Gleichzeitig erhöht sich die Standzeit der Membran, da die Membranoberfläche nicht zugesetzt wird, sondern für das auszutragende Wasser zur Verfügung steht.

Es ist vorteilhaft, dass die Wasseraustragsvorrichtung lösbar mit dem Sammelraum verbunden, insbesondere verschraubt ist. Somit ist ein schneller und einfacher Wechsel der Wasseraustragsvorrichtung realisierbar.

Bei einer weiteren Ausgestaltung der Erfindung ist der Austritt mit einer Pumpe verbunden, wodurch in der Wasseraustragsvorrichtung ein, zum Innendruck des Filtergehäuses unterschiedlicher Druck erzeugbar ist. Die Pumpe kann hierbei eine Unterdruck- bzw. Überdruckpumpe sein, welche die Wassermoleküle durch die Membran hindurch saugen bzw. drücken. Anstelle einer Pumpe können auch vorhandene Druckspeicher, wie sie z. B. im Kraftfahrzeug vorhanden sind, genutzt werden. Somit kann der für eine Pumpe erforderliche Bauraum und die Kosten eingespart werden.

Das erfindungsgemäße Verfahren zum Betreiben eines oben beschriebenen Kraftstofffilters sieht vor, dass das in dem Sammelraum abgeschiedene, verunreinigte Wasser durch den Eintritt in die Wasseraustragsvorrichtung einströmt. Durch einen Druckunterschied zwischen dem Eintritt und dem Austritt treten Wassermoleküle aus dem mit Kraftstoff verunreinigten Wasser durch die Membran hindurch und können als reines Wasser in die Umwelt abgegeben werden.

Gemäß einer vorteilhaften Weiterbildung wird die Membran erst nach einer definierten Zeitspanne mit dem verunreinigten Wasser beaufschlagt. Hierzu wird dann ein Ventil geöffnet, welches den Strömungsweg zu der Membran freigibt. Die Zeitspanne kann einerseits eine vorgegebene Zeitspanne ab der Inbetriebnahme des Kraftstofffilters sein. Hierbei ist die Zeitspanne derart gewählt, dass eine ausreichende Menge Wasser in dem Sammelraum enthalten ist, um die Membran nicht mit Kraftstoff zu verstopfen. Weiterhin kann die Zeitspanne auch ein Zeitraum nach dem Abschalten der Brennkraftmaschine sein. Nach dem Abschalten der Brennkraftmaschine wird der Kraftstofffilter nicht mehr durchströmt, wodurch sich das Kraftstoff-Wassergemisch selbst trennt. Durch diesen Trennvorgang wird Wasser mit einer geringeren Kraftstoffkonzentration auf die Membran geleitet, wodurch die Standzeit der Membran erhöht wird.

Bei einem vorteilhaften Verfahren sind Zeitperioden vorgesehen, welche drucklose Zustände an der Membran erzeugen. Diese Zeitperioden können vor, während oder nach dem Betrieb des Kraftstofffilters vorgesehen sein. Die Länge der Zeitperioden ist derart gewählt, dass die Kraftstoffreste ausreichend Zeit haben, aus der Membran heraus zu diffundieren. Hierzu kann eine Zeitperiode z. B. wenige Minuten betragen. Bei anderen Ausgestaltungen kann die Zeitperiode jedoch auch einige Stunden dauern, wobei selbstverständlich jeder Zwischenwert gewählt werden kann. In diesen Zeitperioden sind die Membranen von dem in dem Kraftstofffilter herrschenden Druck getrennt. Auch andere Druckquellen, wie z.B. Pumpen sind in diesen Zeitperioden von den Membranen getrennt, so dass außerhalb der Membran kein höheres Druckniveau als in den Kanalstrukturen der Membran anliegt. Während diesen Zeitperioden, erfolgt eine Rückdiffusion der Kraftstoffreste aus der Membran in das, die Membran umgebende Wasser. Für die Rückdiffusion ist kein besonderer Antrieb erforderlich, da die Konzentrationsunterschiede ausreichend sind. Durch die Rückdiffusion löst sich die Deckschicht aus Kraftstoffresten von der Membran ab, bzw. es bildet sich keine Deckschicht. Zur Unterstützung des Ablösevorgangs können Vibrationen eingeleitet werden. Alternativ kann die Membran auch rückgespült werden, indem Druck entgegen der regulären Durchströmungsrichtung auf die Membran wirkt. Hierzu wird im Verhältnis zu dem, die Membran umgebenden Druck ein höherer Druck in den Kanalstrukturen erzeugt. Durch die Zeitperioden mit drucklosen Zuständen kann die Lebensdauer der Membran erheblich verlängert werden.

### Kurze Beschreibung der Zeichnungen

Weitere Einzelheiten der Erfindung werden nachfolgend anhand der Figuren erläutert. Hierbei zeigt

Figur 1 einen Kraftstofffilter im Schnitt,

Figur 2 eine Wasseraustragsvorrichtung ohne Gehäuse,

Figur 3 einen Ausschnitt aus einer Wasseraustragsvorrichtung im Schnitt und

Figur 4 einen Ausschnitt aus dem Kraftstofffilter im Schnitt.

### Ausführungsform(en) der Erfindung

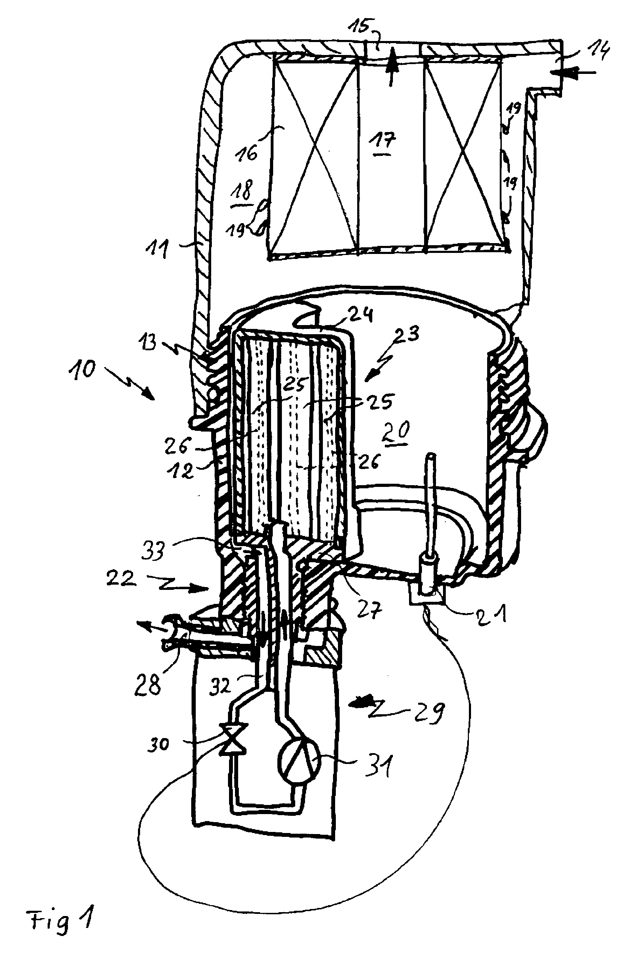

In Figur 1 ist ein Kraftstofffilter im Schnitt dargestellt. Der Kraftstofffilter verfügt über ein Filtergehäuse 10, welches über ein Oberteil 11 und ein Unterteil 12 verfügt. Das Oberteil 11 ist über eine Schraubverbindung 13 mit dem Unterteil 12 dichtend verbunden. Weiterhin verfügt das Oberteil 11 über einen Einlass 14 und einen Auslass 15. Zwischen dem Einlass 14 und dem Auslass 15 ist ein Filterelement 16 angeordnet. Das Filterelement 16 umschließt eine Reinseite 17, welche dichtend von einer mit dem Einlass 14 verbundenen Rohseite 18 getrennt ist. An dem Filterelement 16 scheiden sich Wassertröpfchen 19 ab, welche in einen Sammelraum 20 absinken. Der Sammelraum 20 ist in dem Unterteil 12 des Filtergehäuses 10 angeordnet. Weiterhin ist in dem Unterteil 12 ein Wassersensor 21 angeordnet, welcher in den Sammelraum 20 hineinragt und den Pegelstand des Wassers erfasst. Das Unterteil 12 verfügt außerdem über einen Anschluss 22, an welchem eine Wasseraustragsvorrichtung 23 angeschraubt ist. Die Wasseraustragsvorrichtung 23 verfügt über ein zweiteiliges Gehäuse 24, in welches flache Membranen 25 dichtend eingeklebt sind. Die Außenflächen der Membranen 25 verlaufen senkrecht, so dass die abgeschiedenen Kraftstoffreste ohne Hindernisse nach oben steigen können. Die Membranen 25 verfügen über senkrecht verlaufende Kanalstrukturen 26 (gestrichelt dargestellt), welche an ihrem oberen Ende dichtend durch das Gehäuse 24 verschlossen sind. Mit ihrem unteren Ende sind die Membranen 25 mit einem Sockel 27 verbunden, wobei die Kanalstrukturen 26 mit ihrem unverschlossenen Ende mit einem Austritt 28 kommunizieren. Die Kanalstrukturen 26 können z. B. über eine kreisförmige Querschnittsfläche verfügen, wobei selbstverständlich auch andere Querschnittsflächen, wie rechteckig oder oval, realisiert werden können. An den Sockel 27 schließt eine Steuerungseinheit 29 an, in welcher ein Ventil 30 und eine Pumpe 31 angeordnet ist. Das Ventil ist über einen Strömungskanal 32 mit einem in dem Sockel 27 angeordneten Eintritt 33 verbunden. Der Strömungskanal 32 ist vor dem Ventil 30 zumindest teilweise vertikal ausgerichtet, wodurch sich das Wasser in diesem Bereich sammelt. Durch eine längere Verweilzeit des Wassers in dem Strömungskanal 32 schwimmen Kraftstoffanteile auf und treten aus dem Strömungskanal 32 aus, wodurch sich relativ reines Wasser in dem Strömungskanal 32 befindet.

Der zu reinigende Kraftstoff tritt durch den Einlass 14 in Pfeilrichtung in das Filtergehäuse 10 ein. Der Kraftstoff durchströmt das Filterelement 16 und tritt durch den Auslass 15 aus dem Filtergehäuse 10 aus. Die im Kraftstoff enthaltenen Verunreinigungen werden von dem Filterelement 16 abgeschieden. Das im Kraftstoff enthaltene Wasser wird als Tröpfchen 19 an dem Filterelement 16 ebenfalls abgeschieden. Da Wasser eine höhere Dichte aufweist als Kraftstoff, sinken die Tröpfchen 19 in den Sammelraum 20 und verdrängen nach und nach den Kraftstoff aus diesem Bereich. Das gesammelte Wasser dringt auch in den Strömungskanal 32 ein und verdrängt auch dort den Kraftstoff. Nachdem sich eine größere Menge Wasser angesammelt hat, erfasst dies der Sensor 21, und er sendet ein Signal an das Ventil 30. Das Ventil 30 öffnet sich und die Pumpe 31 beginnt, das Wasser gegen den im Filtergehäuse 10 herrschenden Druck in die Wasseraustragsvorrichtung 23 zu fördern. Diese Ausführung ist bei einem im Saugbetrieb betriebenen Kraftstofffilter einzusetzen. Wird der Kraftstofffilter im Druckbetrieb betrieben, so kann auch die Pumpe 31 entfallen.

Das Wasser befindet sich innerhalb des Gehäuses 24. Durch den in dem Gehäuse 24 herrschenden Druck werden die Wassermoleküle durch die Membran 25 hindurchgedrückt und sammeln sich als reines Wasser in den Kanalstrukturen 26. Das Wasser fließt dann in den Kanalstrukturen 26 ab und gelangt durch den Sockel 27 hindurch zu dem Austritt 28, wo das Wasser bedenkenlos in die Umwelt abgegeben werden kann. Sobald der Wasserpegel in dem Sammelraum 20 unter einen definierten Wert sinkt, sendet der Sensor 21 ein entsprechendes Signal an das Ventil 30, wodurch der Strömungskanal 32 verschlossen wird.

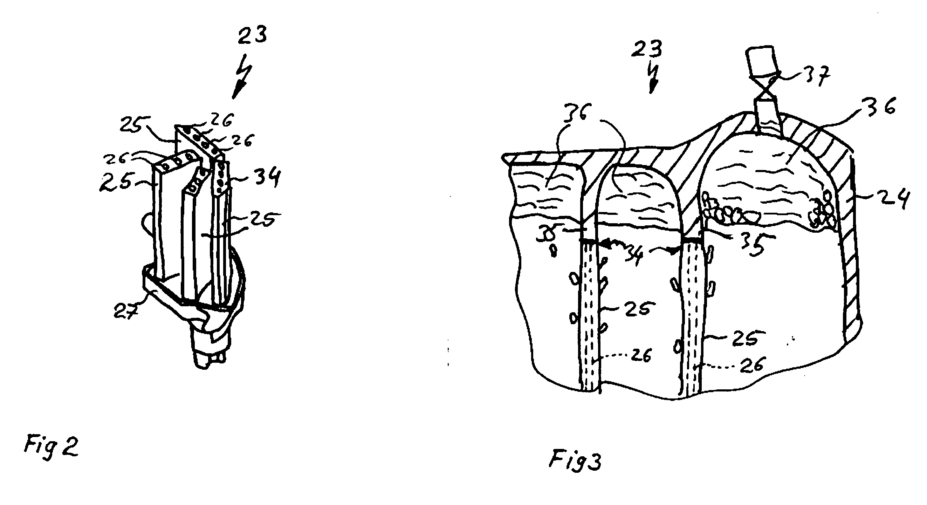

In Figur 2 ist eine Wasseraustragsvorrichtung 23 ohne Gehäuse 24 dargestellt. Der Figur 1 entsprechende Bauteile sind mit gleichen Bezugszeichen versehen. Die Membranen 25 sind als flache Bauteile mit einer senkrecht verlaufenden Kanalstruktur 26 ausgebildet. An ihrem oberen Ende 34 sind die Kanalstrukturen 26 dichtend verschlossen. Die Abdichtung kann auch durch eine im Gehäuse 24 eingebrachte Dichtscheibe erfolgen.

In Figur 3 ist ein Ausschnitt aus einer Wasseraustragsvorrichtung 23 im Schnitt dargestellt. Die Membranen 25 sind mit ihren oberen Enden 34 dichtend mit Stegen 35 verbunden, wobei die Stege 35 an das Gehäuse 24 angeformt sind. Bei anderen Ausgestaltungen können die Stege 35 auch separat ausgeführt und mit dem Gehäuse 24 verbunden werden. Durch die Verbindung der Stege 35 mit den Membranen 25 sind die oberen Enden 34 der Membranen 25 dichtend verschlossen. Weiterhin bilden die Stege 35 gemeinsam mit dem Gehäuse 24 ein Totvolumen 36, in welchem sich die an der Membran 25 abgeschiedenen Kraftstoffreste sammeln können. Das Totvolumen 36 verfügt über ein Ablassventil 37, durch welches die Kraftstoffreste aus dem Totvolumen 36 entweichen können. Diese Kraftstoffreste strömen dann zurück in das Filtergehäuse 10, wo sie dem Kraftstoff beigemengt werden.

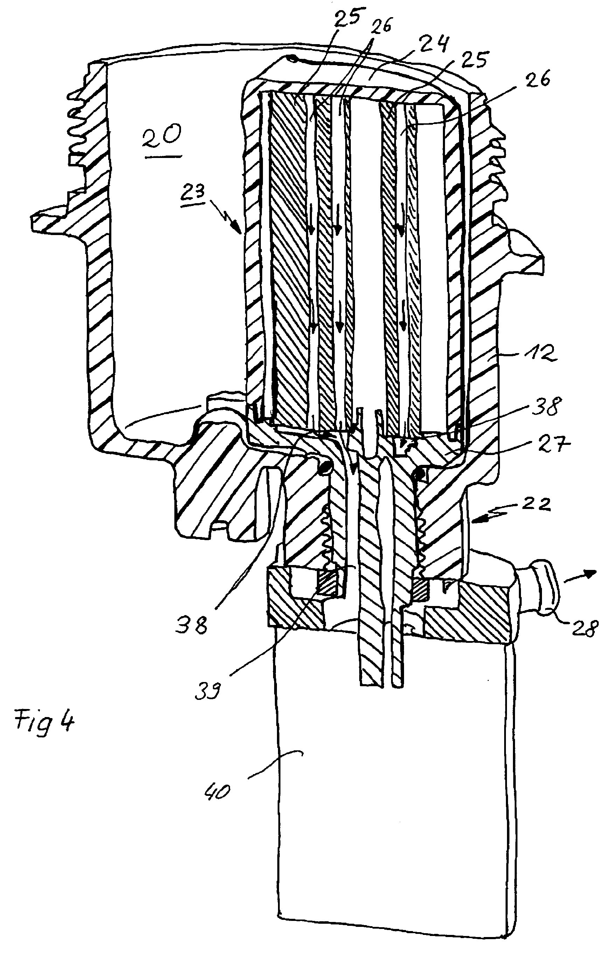

In Figur 4 ist ein Ausschnitt aus dem Kraftstofffilter gemäß Figur 1 im Schnitt dargestellt. Der Figur 1 entsprechende Bauteile sind mit gleichen Bezugszeichen versehen. Die Membranen 25 sind mit ihrem oberen Ende derart mit dem Gehäuse 24 verbunden, dass die Kanalstrukturen 26 dichtend verschlossen sind. Das untere Ende der Membranen 25 ist mit dem Sockel 27 verbunden, wobei der Sockel 27 über einen Drainagekanal 38 verfügt. Die Kanalstrukturen 26 münden mit ihren unverschlossenen Enden in diesen Drainagekanal 38. Der Drainagekanal 38 ist derart ausgebildet, dass alle Kanalstrukturen 26 in den Drainagekanal 38 münden. Hierzu verfügt der Drainagekanal 38 über mehrere Seitenarme, welche entsprechend der Ausgestaltung der Membranen 25 in dem Sockel 27 verlaufen. Der Drainagekanal 38 mündet in ein zentrales Fallrohr 39. Zur besseren Ableitung der Wassertropfen verläuft der Drainagekanal 38 abfallend in Richtung des Fallrohrs 39.

Die in den Kanalstrukturen 26 abgeleiteten Wassertropfen sammeln sich in dem Drainagekanal 38 und werden in Pfeilrichtung über das Fallrohr 39 in einen Wasserauffangraum 40 geleitet. Der Austritt 28 ist mit diesem Wasserauffangraum 40 verbunden, wodurch das Wasser entfernbar ist.

## Patentansprüche

1. Kraftstofffilter, insbesondere für Kraftfahrzeuge, aufweisend ein Filtergehäuse (10) mit einem Einlass (14) und einem Auslass (15), und einer Wasseraustragsvorrichtung (23), wobei zwischen dem Einlass (14) und dem Auslass (15) ein Filterelement (16) zur Reinigung von Kraftstoff angeordnet ist, wobei in dem Filtergehäuse (10) ein Sammelraum (20) vorgesehen ist, in welchem sich das aus dem Kraftstoff abgeschiedene Wasser sammelt, wobei die Wasseraustragsvorrichtung (23) über ein Gehäuse (24) verfügt, welches über einen Eintritt (33) und einen Austritt (28) verfügt, wobei in dem Gehäuse (24) eine für Wassermoleküle durchlässige Membran (25) angeordnet ist, welche den Eintritt (33) von dem Austritt (28) trennt, **dadurch gekennzeichnet, dass** die durch die Membran (25) hindurchgetretenen Wassermoleküle in Kanalstrukturen (26) zu Wassertropfen vereinen, wobei die Kanalstrukturen (26) einseitig am oberen Ende durch das Gehäuse (24) dichtend verschlossen sind, wobei die offenen Enden der Kanalstrukturen (26) in einen Sockel (27) mit einem Drainagekanal (28) münden, so dass die Wassertropfen der enzelnen Kanalstrukturen (26) zusammengeführt und ausgetragen werden.

2. Kraftstofffilter nach Anspruch 1, **dadurch gekennzeichnet, dass** die Membran (25) aus einem anorganischen Material, insbesondere Keramik besteht.

3. Kraftstofffilter nach Anspruch 2, **dadurch gekennzeichnet, dass** zwischen dem Eintritt (33) und dem Austritt (28) ist ein Ventil (30) angeordnet ist.

4. Kraftstofffilter einem der vorangehenden Ansprüche, **dadurch gekennzeichnet, dass** ein Sensor (21) im Sammelraum (20) angeordnet ist, welcher mit dem Ventil (30) korrespondierend verbunden ist.

5. Kraftstofffilter, nach einem der vorangehenden Ansprüche, **dadurch gekennzeichnet, dass** das Gehäuse (24) über ein Totvolumen (36) verfügt, in welchem sich von der Membran (25) abgeschiedene Kraftstoffreste sammeln.

6. Kraftstofffilter nach Anspruch 5, **dadurch gekennzeichnet, dass** das Totvolumen (36) über ein Ablassventil (37) mit dem Sammelraum (20) kommunizierend verbunden ist.

7. Kraftstofffilter nach einem der vorangehenden Ansprüche, **dadurch gekennzeichnet, dass** die Wasseraustragsvorrichtung (23) lösbar mit dem Sammelraum (20) verbunden, insbesondere verschraubt ist.

8. Kraftstofffilter nach einem der vorangehenden Ansprüche, **dadurch gekennzeichnet, dass** der Austritt (28) mit einer Pumpe (31) verbunden ist, wodurch in der Wasseraustragsvorrichtung (23) ein zum Innendruck des Filtergehäuses (10) unterschiedlicher Druck erzeugbar ist.

9. Verfahren zum Betreiben eines Kraftstofffilters gemäß einem der vorangehenden Ansprüche, **dadurch gekennzeichnet, dass** das in dem Sammelraum (20) abgeschiedene, verunreinigte Wasser durch den Eintritt (33) in die Wasseraustragsvorrichtung (23) einströmt, durch einen Druckunterschied zwischen dem Eintritt (33) und dem Austritt (28) treten Wassermoleküle durch die Membran (25) hindurch und können als reines Wasser in die Umwelt abgegeben werden.

10. Verfahren nach Anspruch 9, **dadurch gekennzeichnet, dass** die Membran (25) nach einer definierten Zeitspanne mit dem verunreinigten Wasser beaufschlagt wird.

## Claims

1. Fuel filter, more especially for automotive vehicles, the said fuel filter including a filter housing (10) having an inlet (14) and an outlet (15), and a water discharge device (23), wherein a filter element (16) for filtering fuel is disposed between the inlet (14) and the outlet (15), wherein a collecting chamber (20) is provided in the filter housing (10), in which collecting chamber (20) the water separated off from the fuel is collected, wherein the water discharge device (23) has a housing (24), which has an inlet (33) and an outlet (28), wherein a diaphragm (25) that is permeable to water molecules is disposed in the housing (24), the said diaphragm separating the inlet (33) from the outlet (28), **characterised in that** the water molecules that have passed through the diaphragm (25) combine to form drops of water in duct structures (26), wherein the dud structures (26) are sealingly closed on one side at the upper end by the housing (24), wherein the open ends of the duct structures (26) open out into a base (27) with a drainage channel (28), such that the drops of water in the individual duct structures (26) are brought together and discharged.

2. Fuel filter according to claim 1, **characterised in that** the diaphragm (25) is made from an inorganic material, more especially ceramic.

3. Fuel filter according to claim 2, **characterised in that** a valve (30) is disposed between the inlet (33) and the outlet (28).

4. Fuel filter according to one of the preceding claims, **characterised in that** a sensor (21) is disposed in the collecting chamber (20), the said sensor being correspondingly connected to the valve (30).

5. Fuel filter according to one of the preceding claims, **characterised in that** the housing (24) has a dead volume (36) and residual fuel that has been separated off by the diaphragm collects in the said dead volume.

6. Fuel filter according to claim 5, **characterised in that** the dead volume (36) is connected to the collecting chamber (20) in a communicating manner via an outlet valve (37).

7. Fuel filter according to one of the preceding claims, **characterised in that** the water discharge device (23) is connected, more especially screw-connected, in a detachable manner to the collecting chamber (20).

8. Fuel filter according to one of the preceding claims, **characterised in that** the outlet (28) is connected to a pump (31), it thereby being possible to generate a pressure in the water discharge device (23) that differs from the pressure inside the filter housing (10).

9. Method for operating a fuel filter in accordance with one of the preceding claims, **characterised in that** the contaminated water that has been separated off in the collecting chamber (20) flows through the inlet (33) into the water discharge device (23); through the pressure difference between the inlet (33) and the cutter (28) water molecules pass through the diaphragm (25) and can be released as pure water into the environment

10. Method according to claim 9, **characterised in that** the diaphragm (25) is impinged upon with the contaminated water after a defined time interval.

## Revendications

1. Filtre à carburant notamment pour véhicule automobile comportant un boîtier de filtre (10) muni d'une entrée (14) et d'une sortie (15) ainsi que d'un dispositif d'évacuation d'eau (23),
un élément de filtre (16) pour nettoyer le carburant étant prévu entre l'entrée (14) et la sortie (15),
le boîtier de filtre (10) comportant une chambre collectrice (20) dans laquelle s'accumule l'eau séparée du carburant,
le dispositif d'évacuation l'eau (23) comportant un boîtier (24) muni d'une entrée (33) et d'une sortie (28),
le boîtier (24) ayant une membrane (25) perméable aux molécules d'eau qui sépare l'entrée (33) de la sortie (28),
**caractérisé en ce que**
les molécules d'eau qui ont traversé la membrane (25), se réunissent en gouttes d'eau dans des structures de canaux (26), ces structures de canaux (26) étant fermées de manière étanche d'un côté à l'extrémité supérieure par le boîtier (24), et les extrémités ouvertes des structures de canaux (26) débouchent dans un socle (27) muni d'un canal de drainage (28) de façon à collecter les gouttelettes d'eau des différentes structures de canaux (26) et à les évacuer.

2. Filtre à carburant selon la revendication 1,
**caractérisé en ce que**
la membrane (25) est en une matière anorganique notamment en céramique.

3. Filtre à carburant selon la revendication 2,
**caractérisé par**
une soupape (30) entre l'entrée (33) et la sortie (28).

4. Filtre à carburant selon l'une quelconque des revendications précédentes,
**caractérisé en ce qu'**
un capteur (21) prévu dans la chambre collectrice (20) est relié de manière correspondante à la soupape (30).

5. Filtre à carburant selon l'une quelconque des revendications précédentes,
**caractérisé en ce que**
le boîtier (24) dispose d'un volume mort (36) dans lequel se collectent les résidus de carburant séparés par la membrane (25).

6. Filtre à carburant selon la revendication 5
**caractérisé en ce que**
le volume mort (36) est relié de façon à communiquer par une soupape d'échappement (37) avec la chambre collectrice (20).

7. Filtre à carburant selon l'une quelconque des revendications précédentes,
**caractérisé en ce que**
le dispositif d'évacuation d'eau (23) est relié de manière amovible à la chambre collectrice (20) notamment par vissage.

8. Filtre à carburant selon l'une quelconque des revendications précédentes,
**caractérisé en ce que**
la sortie (28) est reliée à une pompe (31) ce qui permet de générer dans le dispositif d'évacuation d'eau (23) une pression différente de la pression intérieure du boîtier de filtre (10).

9. Procédé de gestion d'un filtre à carburant selon l'une quelconque des revendications précédentes,
**caractérisé en ce que**
l'eau sale déposée dans la chambre collectrice (20) passe par l'entrée (33) dans le dispositif d'évacuation d'eau (23), et la différence de pression entre l'entrée (33) et la sortie (28) fait passer les molécules d'eau à travers la membrane (25) sous forme d'eau nettoyée que l'on peut rejeter dans la nature.

10. Procédé selon la revendication 9,
**caractérisé en ce que**
la membrane (25) est exposée à l'eau non nettoyée après une durée définie.
